Europäisches Patentamt

European Patent Office

Office européen des brevets

(11) Publication number: **0 132 410**
**B1**

# EUROPEAN PATENT SPECIFICATION

(45) Date of publication of patent specification: **21.06.89**

(51) Int. Cl.⁴: **G 11 B 7/24**

(21) Application number: **84305064.2**

(22) Date of filing: **25.07.84**

(54) Information recording media.

(30) Priority: **25.07.83 JP 135488/83**

(43) Date of publication of application:
**30.01.85 Bulletin 85/05**

(45) Publication of the grant of the patent:
**21.06.89 Bulletin 89/25**

(84) Designated Contracting States:
**DE FR GB NL**

(56) References cited:
**EP-A-0 068 801**
**FR-A-2 266 934**
**FR-A-2 502 825**

**PROCEEDINGS OF SPIE - THE INTERNATIONAL SOCIETY FOR OPTICAL ENGINEERING, Optical Storage Media, vol. 420, 6th-10th June 1983, Arlington, Virginia, SPIE, pages 313-318, Bellingham, Washington, US; YOSHIO AOKI et al.: "New optical recording material for data storage"**

The file contains technical information submitted after the application was filed and not included in this specification

(73) Proprietor: **SONY CORPORATION**
**7-35 Kitashinagawa 6-Chome Shinagawa-ku Tokyo 141 (JP)**

(72) Inventor: **Nakane, Yasuaki c/o Sony Corporation**
**Patents Division 7-35 Kitashinagawa 6-chome Shinagawa-ku Tokyo (JP)**
Inventor: **Kitagawa, Masataka c/o Sony Corporation**
**Patents Division 7-35 Kitashinagawa 6-chome Shinagawa-ku Tokyo (JP)**
Inventor: **Kiyomiya, Tadashi c/o Sony Corporation**
**Patents Division 7-35 Kitashinagawa 6-chome Shinagawa-ku Tokyo (JP)**
Inventor: **Yanada, Tetsunosuke c/o Sony Corporation**
**Patents Division 7-35 Kitashinagawa 6-chome Shinagawa-ku Tokyo (JP)**

(74) Representative: **Thomas, Christopher Hugo et al**
**D Young & Co 10 Staple Inn London WC1V 7RD (GB)**

## Description

This invention relates to information recording media for use with focused laser beams, and suitable for use in various types of imaging recording files and large capacity memory means including video discs and digital audio discs. It relates in particular to the so-called direct read after write (DRAW) type information recording media capable of recording and reproducing information.

Various DRAW type information recording media have been proposed. One example of such a recording medium uses a laser beam modified or modulated by an information signal to be recorded and which is irradiated on a thin membrane of a low melting point metal formed on a substrate to melt or evaporate the metal membrane under the concentrated heating in accordance with the information contained therein, thereby forming apertures or recording bits in the metal membrane, so that the recording is carried out as a change in the configuration of the medium. However, formation of the recording bits in this way requires a large beam power for writing, and in addition involves difficulty in controlling the shape of the recorded bits resulting from the melting. In consequence, the noise level is increased and the image resolution lowered, thus making it difficult to obtain high density recording.

There has also been proposed a recording medium which utilizes a change in the optical characteristics instead of a change in the configuration of the recording layer for writing and reading purposes. For example, in the medium disclosed in Japanese Laid-Open Patent Application No. 52/138145, recording is performed in the form of local crystallization in an amorphous recording layer and caused by heating by a recording laser beam, and the recorded information is read out using the difference in optical characteristics between the crystallized and the non-crystallized regions. However, such recording has to be done using gradual heating and gradual cooling, to cause the crystallization. In the case of a disc-like information recording medium, for example, of 300 mm diameter and using signals of about 5 MHz and rotating the disc at about 1800 rpm, the recording conditions necessarily involve rapid heating and rapid cooling. Accordingly, it is difficult to achieve the desired crystallization. On the other hand, those materials which are capable of crystallizing under such high speed recording conditions are unstable and are not suitable for storage for a long time. Particularly in the case where the recording layer of the amorphous material is formed by vapour deposition, the amorphous vapour-deposited material does not go through the step of atom rearrangement for crystallization, and the eventual stable state of the recording layer deposited in the amorphous form is the crystallized form. Consequently, the amorphous phase in the non-recording region or in the not yet recorded region is gradually crystallized during long storage, causing lack of stability and a reduction in the signal-to-noise (S/N) ratio. Moreover, since there is no substantial change obtained in the optical characteristics merely by the crystallization of the amorphous layer, it is impossible to obtain high resolution, a high S/N ratio, and a high recording density.

A further example of recording medium is disclosed in Japanese Laid-Open Patent Application No. 57/22095 wherein the recording layer comprises a first layer composed of Au or Ag and a second layer composed of In or Sn, and solid phase diffusion is caused between the first and second layers by heating by irradiation using a recording laser beam. The recorded information is read out by sensing the change in the reflectance between the recorded region where the solid phase diffusion has been caused and the other region where no such solid phase diffusion exists. However, since the reflectance is mainly determined by the material of the second layer disposed on the side where the reading laser beam enters in this mode of recording, an insufficiently large change can be obtained upon reading out the recorded information. Therefore, there is insufficient resolution, an insufficiently high S/N ratio, and an insufficiently high recording density. Since the solid phase diffusion is dependent on temperature and time, the solid phase diffusion also proceeds gradually in the non-recorded region or not yet recorded region during a long storage of the recording medium and thereby worsens the S/N ratio.

In a still further example of a recording medium, there is disclosed in Japanese Laid-Open Patent Application No. 57/18031 a dual layer structure composed of a high reflection membrane having a relatively high reflectance to a reading beam, and a low reflection membrane having a relatively low reflectance and a higher absorbance to a writing beam, on a transparent substrate. A recording laser beam is irradiated upon writing on the side of the low reflection membrane to cause alloying or mixing between the metals in the high reflection membrane and the low reflection membrane by heating. Information is recorded by the alloying or mixing of the high reflection membrane, thereby reducing the reflectance. The information is then read out by irradiating a reading beam on the side of the high reflection membrane and utilizing the difference in reflectance between the low reflectance region previously written and the other regions. However, since the recording and the reading laser beams have to be irradiated on opposite sides of the recording medium, this increases the size of the recording and reproducing apparatus and complicates handling of the recording medium.

It is generally required that recording laser beams and, in some instances, reading laser beams, be focused on the recording layer, on a light absorbing layer for use in heating the recording layer, or on the reflection layer. In this case, it is desirable that the laser beams be irradiated through the substrate, which has a thickness, for example, of about 1 mm, and on which the above-mentioned layers are deposited, in order to avoid as much as possible undesired effects resulting from spots in the laser beam focusing area such as are caused by minute scratches, shadows of dust and scattering on the surface of the information recording medium. If the laser beam is irradiated on the substrate side, a certain distance can be obtained between the area where the laser beams are focused and the surface of the substrate, that is, the surface of the medium where such scratches or dust are present. The surface can be kept out of the focal depth of the focusing lens system and, accordingly, reduces the effects of the scratches and dust on the focusing area. However, it is generally impossible to use such a mode of recording and reproduction in an information recording medium of the conventional DRAW type.

It is preferred to use a transparent substrate for the information recording medium, for example, a plastics substrate, from the point of view of economy and also for ease of handling. However, deformation of the substrate is inevitable in a large diameter disc, due to the residual internal stresses resulting from moulding of the substrate, and swelling due to humidity, which results in undesired effects on the energy distribution of the focused laser beam and causes significant problems in recording and reproducing the information. To prevent the deformation of the substrate, it is extremely effective to sandwich a recording layer between a pair of opposed substrates made of identical materials and in the same configuration. However, in the recording medium of the foregoing type for recording information depending on a bit-producing change in the configuration of the medium through melting and evaporation of the metal layer, a sandwich structure cannot be used because it requires a space for permitting the configurational change, that is, a space for accommodating the bulge of the metal at the circumferential edge of bits caused by the surface tension accompanying bit formation.

The Proceeding of SPIE - The International Society for Optical Engineering, volume 420, pages 313 to 318 discloses an optical recording disc in accordance with the pre-characterizing part of claim 1. French patent application FR-A-2 502 825 discloses a thermally insulating layer of Se in an optical information record member.

According to the present invention there is provided an information recording medium for use with focused laser beams modulated with information signals to be recorded, the medium comprising:

a substrate carrying a recording layer comprising a first light permeable layer formed on said substrate, and a second metallic layer formed on said first layer;

said substrate and said first layer having the property of high transmittance to laser beams;

said second layer being composed of a metal at least predominantly composed of a low melting metal which absorbs said laser beams and readily forms an alloy with the material of said first layer;

the thickness of said first layer being such that the reflectance to said laser beams entering from the substrate side is lowered by the interference effect caused by repetitive multiple reflections; and

the metal of said second layer being alloyed to that of said first layer due to the focused irradiation of a laser beam passing through said substrate to said recording layer thereby changing the conditions for said repetitive multiple reflections and changing the reflectance in said recording layer as viewed from said substrate side, thereby effecting the recording of said information signals;

characterized by:

a third light permeable layer disposed on said second layer, said first and third layers being composed of chalcogenide glass; and

a fourth reflective layer formed on said second layer.

The invention will now be described by way of example with reference to the accompanying drawings, throughout which like parts are referred to by like references, and in which:

Figure 1 is an enlarged schematic cross-sectional view illustrating an embodiment of information recording medium according to the invention;

Figure 2 is an exploded cross-sectional view of the medium shown in Figure 1; and

Figures 3 to 5 are characteristic curves for illustrating the characteristics of the recording medium.

In the embodiment illustrated, a dual face type recording structure is shown in which the recording of information and reading of the recorded information can be done from the same side on each of the main surfaces respectively, so that the recording capacity per sheet of information recording medium is increased.

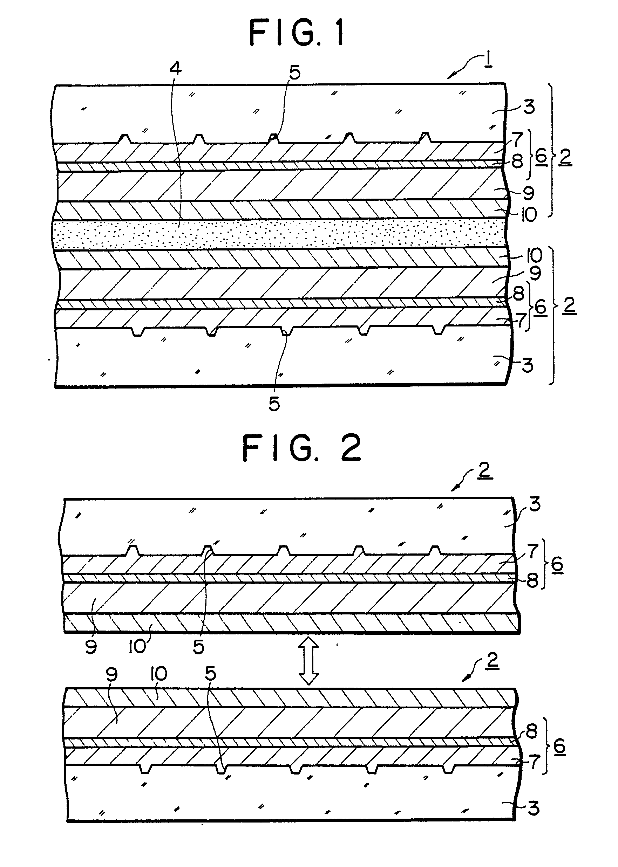

In Figure 1, the dual face type information recording medium is illustrated generally by reference numeral 1. The medium 1 comprises a pair of recording medium elements 2 each having an identical structure as shown in Figure 2, the two elements 2 being bonded together by means of adhesive 4 at their interface in inverted relation with respect to their substrates 3.

The substrate 3 for each of the elements 2 is composed of a transparent material having a high transmittance to the recording and reading laser beams. Such substrates may consist, for example, of acrylic, polycarbonate, or similar resin substrates such as a polymethylmethacrylate substrate. Guide grooves 5 are formed on one surface of the substrate 3 upon moulding of the substrate 3, the groove 5 having a depth corresponding to about 1/8 to 1/4 of the wavelength of the laser beams employed. A recording layer 6 is deposited on the substrate 3 on the side having the guide grooves 5. The recording layer comprises a first layer 7 deposited on the substrate 3 and a second layer 8 deposited on the first layer 7. A (third) light permeable layer 9 having a high transmittance to the laser beams employed, and a (fourth) reflective layer 10 for the same laser beams are successively deposited on the recording layer 6. These layers 7, 8, 9 and 10 can be formed by means of vacuum deposition, electron beam deposition, sputtering or the like.

When information is recorded on the medium, a recording laser beam is irradiated on each of the elements 2 from the substrate side; specifically, from the upper substrate 3 for the upper element 2 and from the lower substrate 3 for the lower element 2 as shown in Figure 1. The laser beams are focused at the recording layer 6. The focused laser beams are efficiently absorbed and converted into heat in the second layer 8 of the recording layer 6. The first and second layers 7 and 8 are alloyed by the heat to cause a change in their optical characteristics, in particular in the reflectance, and thereby provide the information recording.

In the structure described, the second layer 8 of the recording layer 6 is composed of a low melting point metal such as Te, Bi, Sb or In or a low melting point compound of these metal elements consisting mainly of these metals, such that the second layer 8 sufficiently absorbs the laser beams to be alloyed with the first layer 7 to change the optical characteristic of the first layer 7. As the second layer 8, there can be used Bi, or $BiTe_x$, where x is greater than 0.1 but less than 3, where a semiconductor laser of 700 to 800 nm wavelength band is employed. It is desirable that the thickness of the second layer be in the range from about 10 to 50 nm.

The first layer 7 of the recording layer 6 is made of a material which is as permeable to the laser beams employed as possible, and is easily alloyed with the material of the second layer. The first layer 7 is preferably made of a chalcogenide glass and composed of a material which forms a polyphase alloy when combined with the second layer 8. The first layer 7, can be made of $SbSe_y$, where y is greater than 0.5 but less than 2, in the case where the second layer 8 is made Bi or $BiTe_x$.

The thickness of the first layer 7 is such that the effective reflectance is lowered and the recording laser beam can be absorbed efficiently in the second layer 8 upon irradiation of the laser beam through the substrate 3, resulting from repetitive multiple-reflection interference resulting at the interface between the first layer 7 and the substrate 3 and at the interface between the first layer 7 and the second layer 8. Although it is advantageous that as the reflectance is lowered the absorbance of the recording laser beam is increased, a certain amount of reflected light is necessary for use as a detection light for the stable operation of the auto-focusing or auto-tracking mechanism for the laser beam during recording. In view of the foregoing, the reflectance is desirably in the range of 10 to 20% in the unrecorded state.

It is necessary that the heat capacity of the recording layer 6 be small and the thermal diffusion due to heat conduction low. It is also necessary that the absorbance of the irradiated recording laser beam be high in order to permit information recording at a low power. These constitute preferred conditions together with the recording reaction itself, that is, a high sensitivity in the alloying effect between the first and second layers 7 and 8.

The light permeable layer 9 is composed of the same material, such as chalcogenide glass, as the first layer 7, and has a low heat conductivity.

The reflective layer 10 is formed by a metal layer having a large difference with respect to refractive index and absorption coefficient as compared with those of the light permeable layer 9 so as to provide a high degree of reflectance to a laser beam at the interface between the reflective layer 10 and the light permeable layer 9. For example the reflective layer 10 may be made of a metal such as Al, Sn, Ag or Au. The thickness of the reflective layer 10 is selected such that the amount of the laser beam passing through the reflective layer 10 is negligibly small.

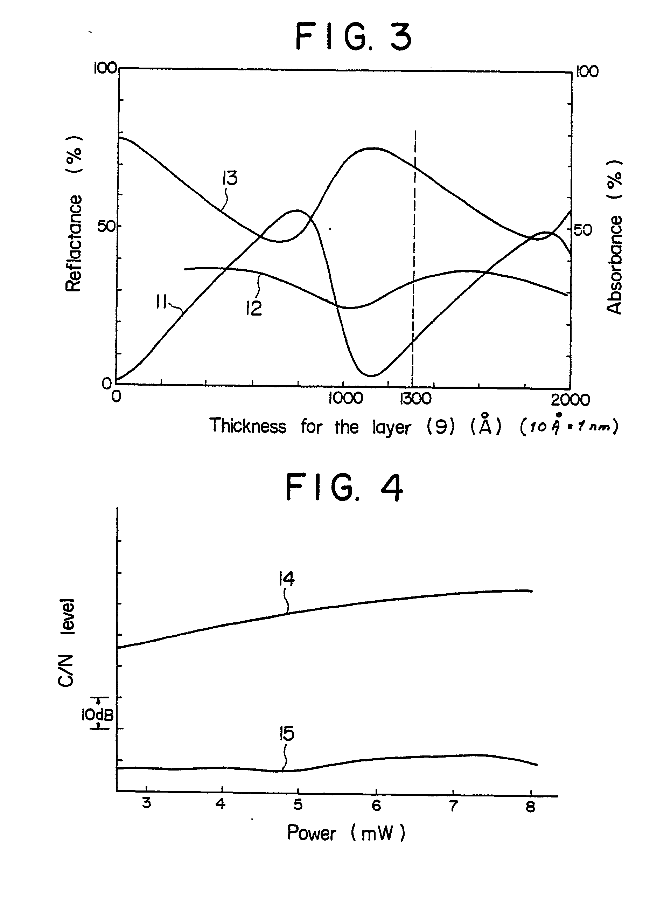

Where the information recording medium 2 has the first layer 7 made of $Sb_2Se_3$ of about 30nm thickness, the second layer 8 made of $Bi_2Te_3$ of about 15 nm thickness, the reflective layer 10 made of Al, and the light permeable layer 9 made of $Sb_2Se_3$, the relationship between the reflectance to semiconductor laser beams at 830nm wavelength from the substrate 3 and the thickness of the light permeable layer 9 is shown by the curve 11 in Figure 3. The curve 12 shows the result of the measurement for the reflectance in an area where the alloying has taken place in the first and second layers 7 and 8 after recording. Moreover, the curve 13 shows the absorbance for the laser beams in the second layer 8. Thus, the reflectance before and after irradiation, that is, in the not yet recorded region and the recorded region shows the change indicated by the curves 11 and 12. Accordingly, when a reading laser beam, for example, having the same wavelength as that of the recording laser beam but a sufficiently smaller power as compared with that of the recording laser beam, is irradiated after recording on the same side as the recording laser beam, recorded information can be read out at an output level corresponding to the difference in the reflectance.

In order efficiently to absorb the recording laser beam irradiated through the substrate 3 into the second layer 8 of the recording layer 6 and convert it into heat, it is effective to reduce the amount of light reflected at the interface between the second layer 8 and the first layer 7, and to decrease the amount of light transmitted through the interface between the second layer 8 and the first layer 7. In order to achieve this, the thickness of the first layer 7 is made such that the interference effect due to the multiple reflections can be obtained as described above so that the substantially non-reflective condition can be obtained at the interface between the first and second layers 7 and 8. In addition, the thickness of the light permeable layer 9 is adjusted so as to decrease the amount of light passing through the interface between the second layer 8 and the light permeable layer 9 to improve the absorbing efficiency of the laser beams.

It will be seen from Figure 3 that although the thickness of the light permeable layer 9 is chosen at the vicinity of the bottom of the curve 11 showing a low reflectance, it is actually desired that the thickness be chosen, for example, between about 120 and 140 nm, and preferably at about 130 nm so as to obtain a reflectance of greater than 10 to 20% which is necessary for creating servo signals for the auto-focusing and auto-tracking as described above, to provide a large change in the reflectance between the not yet recorded region and the recording region, that is, where the curves 11 and 12 show the greatest difference and, further, to obtain a relatively high absorbance shown by the curve 13.

Figure 4 shows the recording sensitivity characteristic of the element 2 in which the light permeable layer 9 has a thickness of 130 nm. In this instance, the laser beams have a wavelength of 830 nm and the lens numerical aperture NA is 0.5 in the recording and reproducing apparatus. The recording medium 1 is rotated at 1800 rpm and the recording is performed at 5 MHz for an area of 100 mm radius from the centre. In Figure 4, curves 14 and 15 represent signal and noise components, respectively, which show that the medium provides a high S/N (C/N) ratio.

In the foregoing embodiment, a pair of information recording medium elements 2 are secured to each other by means of the adhesive 4 to provide an information recording medium 1 of the dual face recording type. Since the reflective layer 10 is formed on each of the elements 2 such that the laser beams irradiated on each of the elements 2 cannot leak externally, there are no mutual effects occurring between the elements 2 and thus no particular consideration is necessary for the optical characteristics of the adhesive 4.

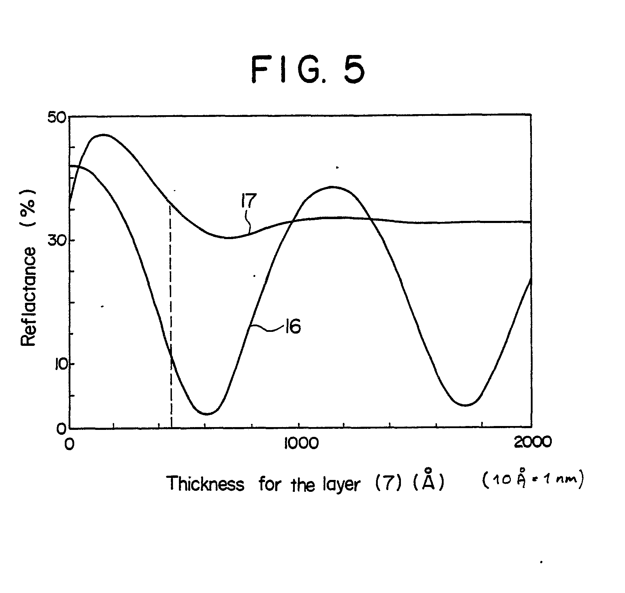

Although the foregoing explanation has been based on a recording medium 1 of the dual face recording type, a single face recording type can also be employed by providing the medium 1 with a single information recording medium element 2. A high melting point metal such as Ni, Cr, W, Mo or Ti can be used for the reflective layer 10 so as to suppress the scattering or evaporation of the low melting point metal in the second layer 8 of the recording layer 6 around the periphery, caused by the heating of the laser irradiation upon recording and thereby avoid the reduction in resolution power caused by scattering or evaporation. The thickness of the high melting point metal reflection layer 10 in this case may be less than about 20 nm, for instance, about 6 nm, so that the heat capacity is not increased very much. Figure 5 shows the result of the measurement for the relationship between the thickness of the first layer 7 and the reflectance to the laser beams (830 nm) from the substrate 3 in the recording medium 1. The first recording layer 7 was made of $Sb_2Se_3$, the second layer 8 was made of $Bi_2Te_3$ of 15 nm thickness and a high melting point metal reflective layer 10 made of a NiCr layer of 6 nm thickness were employed. The curves 16 and 17 in Figure 5 show the reflectance before and after the alloying between the first and second layers 7 and 8, respectively, that is, before and after the recording. Also in this case, it is desired that the thickness of the first layer 7 be chosen such that the reflectance is greater than 10 to 20% and that there is a substantial difference between the curves 16 and 17. The desirable thickness of the first layer 7 is about 44 nm.

It is also possible to form on a high melting point metal layer a metal layer made of material for preventing leakage and reflection of a laser beam permeating the high melting point layer, for example, organic dyes such as lead phthalocyanine and tin phthalocyanine.

In the information recording medium 1 according to this invention, since the recording layer 6 comprises first and second layers 7 and 8 and the recording is carried out by alloying the metals in the first and second layers 7 and 8 under irradiation by a laser beam, the thickness for the first layer 7 is such that an interference effect is caused due to the repetitive multiple reflections and a large change in the reflectance can be obtained in the recorded region. Consequently, a high contrast and high S/N (C/N) ratio can be obtained, and recording at high sensitivity can be carried out. Furthermore, since the recording is not based on the solid phase solution or crystallization, but on alloying due to the melting of the metals, which does not occur even in long storage, it has excellent aging stability.

Since the recording and reproduction can be carried out by irradiation of the laser beams on the side of the relatively thick substrate 3, scratches or dust on the surface can be kept out of the focal depth of the focusing lens system, whereby the effect of these defects in the recording system on the recording and reproduction can be avoided.

In the embodiment in which a pair of the recording layers 6 are sandwiched between the substrates 3 using paired information recording medium elements 2 as shown in Figure 2, any deformation, if it occurs, in the substrates 3 tends to be offset by the other substrate 3, the drawbacks mentioned previously, for instance, the risk of deformation such as warp and flexure in the information recording medium can effectively be avoided.

**Claims**

1. An information recording medium (1) for use with focused laser beams modulated with information signals to be recorded, the medium (1) comprising:

a substrate (3) carrying a recording layer (6) comprising a first light permeable layer (7) formed on said substrate (3), and a second metallic layer (8) formed on said first layer (7);

said substrate (3) and said first layer (7) having the property of high transmittance to laser beams;

said second layer (8) being composed of a metal at least predominantly composed of a low melting point metal which absorbs said laser beams and readily forms an alloy with the material of said first layer (7);

the thickness of said first layer (7) being such that the reflectance to said laser beams entering from the substrate side is lowered by the interference effect caused by repetitive multiple reflections; and

the metal of said second layer (8) being alloyed to that of said first layer (7) due to the focused irradiation of a laser beam passing through said substrate (3) to said recording layer (6) thereby changing the conditions for said repetitive multiple reflections and changing the reflectance in said recording layer (6) as viewed from said substrate side, thereby effecting the recording of said information signals;

characterized by:

a third light permeable layer (9) disposed on said second layer (8), said first and third layers (7 and 9) being composed of chalcogenide glass; and a fourth reflective layer (10) formed on said second layer (9).

2. A recording medium according to claim 1 wherein the thickness of said third layer (9) is in the range of 120 to 140nm.

3. A recording medium according to claim 1 or claim 2 wherein said fourth layer (10) is Al, Sn, Ag or Au, and has a refractive index and an absorption coefficient greatly different from those of said third layer (9).

4. A recording medium according to claim 1 or claim 2 wherein said fourth layer (10) is Ni, Cr, W, Mo or Ti, thus preventing the metal of said second layer (8) from scattering or evaporating upon heating caused by irradiation by a laser beam.

5. A recording medium according to any one of the preceding claims wherein said second layer (8) is $BiTe_x$, where x is greater than 0.1 and less than 3.

6. A recording medium according to any one of the preceding claims wherein said third layer (9) is $SbSe_y$, where y is greater than 0.5 and less than 2.

**Patentansprüche**

1. Informationsaufzeichnungsmedium (1) zur Verwendung in Verbindung mit fokussierten Laserstrahlen, die mit aufzuzeichnenden Informationssignalen moduliert sind,

wobei das Medium (1) ein Substrat (3) aufweist, das eine Aufzeichnungsschicht (6) trägt, die aus einer auf dem Substrat (3) ausgebildeten, lichtdurchlässigen ersten Schicht (7) und einer auf dieser ersten Schicht (7) ausgebildeten metallischen zweiten Schicht (8) besteht,

wobei das Substrat (3) und die erste Schicht (7) für Laserstrahlen hochdurchlässig sind,

wobei die zweite Schicht (8) aus einer Metallzusammensetzung besteht, die zumindest vorwiegend aus einem Metall mit niedrigem Schmelzpunkt besteht, das die Laserstrahlen absorbiert und mit dem Material der ersten Schicht (7) leicht eine Legierung bildet,

wobei die Dicke der ersten Schicht (7) so bemessen ist, daß das Reflektionsvermögen für von seiten des Substrats eintretende Laserstrahlen aufgrund der durch wiederholte Mehrfachreflektionen verursachte Interferenzwirkung herabgesetzt ist,

und wobei das Metall der zweiten Schicht (8) durch die fokussierte Bestrahlung mit einem durch das Substrat (3) zu der Aufzeichnungsschicht (6) gelangenden Laserstrahl mit dem Metall der ersten Schicht (7) legiert wird, wodurch die Bedingungen für die wiederholten Mehrfachreflektionen und das Reflektionsvermögen der Aufzeichnungsschicht (6), von der Substratseite aus gesehen, verändert werden und die Aufzeichnung der Informationssignale bewirkt wird,

dadurch gekennzeichnet,

daß auf der zweiten Schicht (8) eine dritte lichtdurchlässige Schicht (9) angeordnet ist,

daß die erste und die dritte Schicht (7 und 9) aus Chalkogenid-Glas bestehen,

und daß auf der zweiten Schicht (9) eine vierte reflektierende Schicht (10) ausgebildet ist.

2. Aufzeichnungsmedium nach Anspruch 1, worin die Dicke der dritten Schicht (9) im Bereich von 120 bis 140 nm liegt.

3. Aufzeichnungsmedium nach Anspruch 1 oder 2, worin die vierte Schicht (10) aus Al, Sn, Ag oder Au besteht und einen Brechungsindex und einen Absorptionskoeffizienten besitzt, die von denjenigen der dritten Schicht (9) stark abweichen.

4. Aufzeichnungsmedium nach Anspruch 1 oder 2, worin die vierte Schicht (10) aus Ni, Cr, W, Mo oder Ti besteht, wodurch verhindert wird, daß das Metall der zweiten Schicht (8) bei der Bestrahlung mit einem Laserstrahl versprüht oder verdampft.

5. Aufzeichnungsmedium nach einem der vorhergehenden Ansprüche, worin die zweite Schicht (8) aus $BiTe_x$ besteht, wobei x größer als 0,1 und kleiner als 3 ist.

6. Aufzeichnungsmedium nach einem der vorhergehenden Ansprüche, worin die zweite Schicht (9) aus $SbSe_y$ besteht, wobei y größer als 0,5 und kleiner als 2 ist.

**Revendications**

1. Support (1) d'enregistrement d'informations destiné à être utilisé avec des faisceaux laser focalisés, modulés par des signaux d'informations à enregistrer, le support (1) comprenant:

un substrat (3) portant une couche d'enregistrement (6) qui comprend une première couche perméable à la lumière (7) formée sur le substrat (3) et une seconde couche métallique (8) formée sur la première couche (7),

le substrat (3) et la première couche (7) ayant la propriété de posséder un coefficient élevé de transmission des faisceaux laser,

la seconde couche (8) étant composée d'un métal formé au moins essentiellement d'un métal à faible température de fusion qui absorbe les faisceaux laser et forme facilement un alliage avec le matériau de la première couche (7),

l'épaisseur de la première couche (7) étant telle que le facteur de réflexion des faisceaux laser entrant par le côté du substrat est réduit par l'effet d'interférence provoqué par des réflexions multiples répétées, et

le métal de la seconde couche (8) étant allié à celui de la première couche (7) du fait de l'irradiation focalisée d'un faisceau laser traversant le substrat (3) et parvenant sur la couche d'enregistrement (6), avec modification de cette manière des conditions de réflexion multiple répétée et modification du facteur de réflexion de la couche d'enregistrement (6) vue du côté du substrat si bien que l'enregistrement des signaux d'informations est réalisé, .

caractérisé par:

une troisième couche perméable à la lumière (9) placée sur la seconde couche (8), la première et la troisième couche (7 et 9) étant composées d'un verre de chalcogénure, et

une quatrième couche réfléchissante (10) formée sur la seconde couche (9).

2. Support d'enregistrement selon la revendication 1, dans lequel l'épaisseur de la troisième couche (9) est comprise entre 120 et 140 nm.

3. Support d'enregistrement selon la revendication 1 ou 2, dans lequel la quatrième couche (10) est Al, Sn, Ag ou Au, et a un indice de réfraction et un coefficient d'absorption qui diffèrent beaucoup de ceux de la troisième couche (9).

4. Support d'enregistrement selon la revendication 1 ou 2, dans lequel la quatrième couche (10) est formée de Ni, Cr, W, Mo ou Ti, si bien que le métal de la seconde couche (8) ne peut pas se disperser ou s'évaporer lorsqu'il est chauffé par irradiation par un faisceau laser.

5. Support d'enregistrement selon l'une quelconque des revendications précédentes, dans lequel la seconde couche (8) est formée de $BiTe_x$, x étant supérieur à 0,1 et inférieur à 3.

6. Support d'enregistrement selon l'une quelconque des revendications précédentes, dans lequel la troisième couche (9) est formée de $SbSe_y$, y étant supérieur à 0,5 et inférieur à 2.

# FIG. 1

# FIG. 2

# F I G. 3

Reflectance (%) / Absorbance (%) vs. Thickness for the layer (9) (Å) (10 Å = 1 nm)

# F I G. 4

C/N level vs. Power (mW)

# FIG. 5